# EUROPEAN PATENT SPECIFICATION

(11) **EP 2 642 869 B1**
(45) Date of publication and mention of the grant of the patent: **06.05.2015**
(21) Application number: 11779170.7
(22) Date of filing: 03.11.2011
(51) Int. Cl.: A23F 3/18, A23F 3/42

(54) **PROCESS FOR PREPARING TEA PRODUCTS**
VERFAHREN ZUR HERSTELLUNG VON TEEPRODUKTEN
PROCÉDÉ DE PRÉPARATION DE PRODUITS À BASE DE THÉ

(30) Priority: 26.11.2010 IN MU03234201
(43) Date of publication of application: 02.10.2013
(73) Proprietor: Unilever N.V., 3013 AL Rotterdam (NL); Unilever PLC, London EC4Y 0DY (GB)
(72) Inventor: GRIFFITHS, Allen, Bedford Bedfordshire MK44 1LQ (GB); MUTAI, Felix, Kipkorir, Kericho 20200 (KE); PEILOW, Alan, David, Bedford Bedfordshire MK44 1LQ (GB); PURUSHOTHAMAN, Poovizhi, Ponnammal, Whitefield Bangalore 560 066 (IN); SHARP, David, George, Bedford Bedfordshire MK44 1LQ (GB); SINGH, Gurmeet, Whitefield Bangalore 560 066 (IN)
(74) Representative: Askew, Sarah Elizabeth
(86) International application number: PCT/EP2011/069287
(87) International publication number: WO 2012/069295

(56) References cited:
- EP-A1- 0 530 880
- WO-A1-2007/039018
- WO-A1-2009/083420
- US-A1- 2009 169 679

## Description

### TECHNICAL FIELD

The present invention relates to a process for the preparation of tea products.

### BACKGROUND AND PRIOR ART

It is known to recover aroma during tea processing. Typically the aroma is recovered during drying of fermented tea leaf. Typically the drying is carried out in a vacuum dryer and the exhaust gases from the vacuum dryer are subjected to a step of condensation to recover an aroma condensate. One of the problems with the aroma condensate obtained this way is that it is relatively dilute and the quantity of aroma per dry mass of tea leaf is relatively small.

Secondly, feeding the leaf into the vacuum dryer and processing fermented tea leaf in a vacuum dryer are problematic as the leaf is relatively difficult to transport and tends to stick to heat transfer surfaces.

The present inventors have surprisingly found that pressing the juice out of the fermented leaf and recovering aroma from the resulting leaf residue leads to a process with fewer problems related to feeding into the vacuum dryer and sticking of leaf of the heat transfer surfaces. Furthermore, the process leads to an aroma condensate with a relatively high concentration and an overall higher amount of specific aroma compounds per dry mass of tea leaf, without any negative impact on the black tea obtained by drying the leaf residue.

### DEFINITIONS

### Tea

"Tea" for the purposes of the present invention means material from *Camellia sinensis* var. *sinensis* and/or *Camellia sinensis* var. *assamica.*

"Leaf tea" for the purposes of this invention means a tea product that contains tea leaves and/or stem in an uninfused form, and that has been dried to a moisture content of less than 30% by weight, and usually has a water content in the range 1 to 10% by weight (i.e. "made tea").

"Green tea" refers to substantially unfermented tea. "Black tea" refers to substantially fermented tea. "Oolong tea" refers to partially fermented tea.

"Fermentation" refers to the oxidative and hydrolytic process that tea undergoes when certain endogenous enzymes and substrates are brought together, e.g., by mechanical disruption of the cells by maceration of the leaves. During this process colourless catechins in the leaves are converted to a complex mixture of yellow and orange to dark-brown polyphenolic substances.

"Fresh tea leaves" refers to tea leaves and/or stem that have never been dried to a water content of less than 30% by weight, and usually have a water content in the range 60 to 90%.

As used herein the term "expressing juice" refers to squeezing out juice from fresh tea leaves using physical force, as opposed to extraction of tea solids with the use of a solvent. Thus the term "expressing" encompasses such means as squeezing, pressing, wringing, spinning and extruding. It is possible that a small amount of solvent (e.g. water) is added to the fresh leaves during the expression step. However, in order to prevent significant extraction of tea solids by the solvent, the moisture content of the leaves during expression is preferably that of fresh tea leaves as defined hereinabove. In other words, during the expression step, the moisture content of the tea leaves is between 30 and 90% by weight, more preferably between 60 and 90% by weight. The weight ratio of amount of added solvent during the expression step to the amount of fresh leaves is preferably less than 5, more preferably less than 3, most preferably less than 1. It is particularly preferred that the weight ratio of the amount of added solvent during the expression step to the amount of fresh leaves is less than 0.5. It is also preferred that the fresh leaves are not contacted with nonaqueous solvent (e.g. alcohols) prior to or during expression, owing to the environmental & economic problems associated with such solvents.

The term "tea solids" as used herein means the solid content of the tea juice determined by gravimetry. Preferably, a known mass (about 1 g of tea juice) is taken in a crucible, the crucible is placed in oven at 105 °C for 8 hours, and the residue in the crucible is weighed to determine tea solids. The tea solids are expressed as % by weight of the tea juice.

The term "water-soluble tea solids" as used herein means the water extract of the tea solids, that is the soluble matter extracted from the tea solids according to ISO 9768:1994 (Tea: determination of water extract). The principle of the method specified is extraction of soluble matter from a test portion by boiling water under reflux, filtration, washing, drying and weighing of the hot-water-insoluble residue, and calculation of the water extract. The water-soluble tea solids are expressed as % by weight of the tea solids.

### SUMMARY OF THE INVENTION

According to the present invention there is provided a process comprising the steps of:
a) expressing juice from fresh tea leaves thereby to produce leaf residue and tea juice,
b) subjecting the leaf residue to drying in a dryer to obtain dried leaf residue and a dryer exhaust gas stream, and;
c) recovering aroma from the dryer exhaust gas stream.

### DETAILED DESCRIPTION

Step (a) comprises expressing juice from tea leaves thereby to produce leaf residue and tea juice.

It is preferred that the fresh tea leaves comprise material from var. *assamica* as this variety naturally has a high level of tea actives and so leads to a high level of actives in the leaf residue even after removal of the juice. More preferably the fresh leaves are fresh leaves from var. *assamica.*

The amount of expressed juice is preferably at least 50 ml per kg of the fresh tea leaves. It is preferred that the amount of juice expressed in step (a) is less than 800 ml per kg of tea leaves, more preferably less than 700 ml and most preferably less than 600 ml. It is also preferred, however that the amount of expressed juice is at least 75 ml per kg of the fresh tea leaves, more preferably at least 100 ml and most preferably at least 150 ml. When referring to the volume of juice expressed per unit mass of tea leaves it should be noted that the mass of the tea leaves is expressed on an "as is" basis and not a dry weight basis. Thus the mass includes any moisture in the leaves.

The juice comprises preferably at least 4% by weight tea solids, more preferably at least 4.5% by weight tea solids and most preferably at least 5% by weight tea solids. There is no particular upper limit for the amount of tea solids in the tea juice and the tea juice may preferably comprise up to 30% by weight tea solids.

Water soluble tea solids are preferably 70-100% by weight of the tea solids, more preferably 80-100% by weight of the tea solids and most preferably 90-100% by weight of the tea solids.

The expression step can be achieved in any convenient way so long as it allows for separation of the tea juice from the leaf residue and results in the required quantity of juice. The machinery used to express the juice may, for example, be a hydraulic press, a pneumatic press, a screw press, a belt press, an extruder or a combination thereof. Alternatively, the juice and the leaf residue may separated by filtration or centrifugal separation.

The juice may be obtained from the fresh leaves in a single pressing or in multiple pressings of the fresh leaves. Preferably the juice is obtained from a single pressing as this allows for a simple and rapid process.

In order to minimise generation of off-flavours in the leaf tea and/or juice, it is preferred that the expression step is performed at ambient temperature. For example, the leaf temperature may be from 5- 40 °C, more preferably 10-30 °C.

The time and pressure used in the expression step can be varied to yield the specified amount of juice. Typically, however, the pressures applied to express the juice will range from 0.5 MPa (73 psi) to 10 MPa (1450 psi). The time over which the pressure is applied will typically range from 1 s to 1 hour, more preferably from 10 s to 20 minutes and most preferably from 30 s to 5 minutes.

Prior to expression, the fresh tea leaves may undergo a pre-treatment including, for example, a unit process selected from maceration, withering, fermentation or a combination thereof. Preferably the fresh tea leaves are fermented before expressing the juice. When the fresh tea leaves are fermented before expressing the juice, the leaf tea product is black tea. The fresh tea leaves are preferably macerated before expressing the juice. More preferably, the fresh tea leaves are macerated, and then fermented before expressing the juice.

Step (b) comprises subjecting the leaf residue to drying in a dryer to obtain dried leaf residue and a dryer exhaust gas stream.

The dryer may be a batch dryer or a continuous dryer, preferably a continuous dryer. It is particularly preferred that the dryer is a vacuum dryer. The vacuum dryer is preferably operated at an absolute pressure of from 1 to 650 kPa. The absolute pressure in the vacuum dryer is preferably less than 400 kPa, more preferably less than 300 kPa, and most preferably less than 100 kPa. The absolute pressure in the vacuum dryer is preferably greater than 10 kPa, more preferably greater than 20 kPa. It is particularly preferred that the absolute pressure is from 20-50 kPa.

During drying, part of the moisture in the leaf residue and some part of the volatile aroma compounds in the leaf residue are evaporated. Therefore, the dryer exhaust gas stream comprises a mixture of the gas with water vapour and volatile aroma compounds released from the leaf residue during drying.

The moisture content in the dried leaf residue at the end of step (b) is preferably less than 65% by weight, more preferably less than 60% by weight, and most preferably less than 55 % by weight. The moisture content in the dried leaf residue at the end of step (b) may be as low as 0% by weight, however, it is preferred that the leaves are partially dried during step (b). The moisture content in the dried leaf residue at the end of step (b) is preferably greater than 10%, more preferably greater than 20% by weight, and most preferably greater than 30% by weight. It is particularly preferred that the moisture content in the dried leaf residue at the end of step (b) is from 40% to 50% by weight.

The leaf residue may be processed to produce green leaf tea, black leaf tea or oolong leaf tea. In the case of oolong leaf tea and black leaf tea the process comprises fermenting the fresh tea leaf before step (b) or fermenting the leaf residue after step (b). The manufacturing processes of green leaf tea, black leaf tea and oolong leaf tea are well known and suitable processes are described, for example, in "Tea: Cultivation to Consumption", K.C. Willson and M.N. Clifford (Eds), 1^{st} Edn, 1992, Chapman & Hall (London), Chapters 13 and 14.

A step common to manufacture of all leaf teas is a drying step. In the case of oolong and black leaf tea, the drying step usually also serves to deactivate the fermentation enzymes. Preferably, the dried leaf residue is further dried after step (b) to a moisture content of less than 10% by weight to obtain a leaf tea product. The leaf tea may be dried to a moisture content of less than 5% by weight. The moisture content of the leaf tea may be as low as 0%. Further drying is preferably carried out in a tray dryer or a fluidized bed dryer.

Step (c) comprises recovering aroma from the dryer exhaust stream. Aroma is recovered from the exhaust gas stream preferably by (i) subjecting the dryer exhaust stream to condensation to obtain an aroma condensate, or by (ii) contacting the dryer exhaust gas stream with an adsorbent to obtain adsorbed aroma. It is particularly preferred that aroma is recovered from the dryer exhaust gas stream by subjecting the dryer exhaust gas stream to condensation to obtain the aroma condensate.

Condensation may be carried out by using any suitable equipment. Suitable condensers include, for example, shell and tube type, double pipe type, coiled type, tubular type, spiral type and finned tube type condenser. The heat exchanger of the condenser is preferably vertically mounted. With a shell and tube type condenser, the dryer exhaust gas is preferably on the tube side whilst the cooling fluid is on the shell side or on the annulus side. The dryer exhaust stream preferably flows downwards. The cooling fluid is preferably water. The temperature of the cooling water is preferably below 40 °C, more preferably below 10 °C and most preferably below 5 °C. Condensation may be single stage or multistage. However single stage condensation is preferred.

The condensate comprises recovered volatile aroma compounds and water. The amount of volatile aroma compounds is typically from 0.02 to 5 g per kg dry weight of the fresh tea leaf.

The dryer exhaust gas stream may be contacted with an adsorbent. The adsorbent is preferably selected from the group consisting of activated charcoal, resins (e.g. polystyrene-divinyl benzene beads), zeolites, and tea or mixtures thereof. Preferably, the step of adsorption is followed by a further step of desorption to obtain desorbed aroma. Desorption is preferably carried out as follows: the adsorbent, after having been contacted with the dryer gas exhaust stream, is packed in a column or a fluidized bed and later desorbed to release the aroma components using thermal treatment, organic solvents or super-critical CO₂.

According to a preferred aspect, the recovered aroma condensate or the desorbed aroma may be further subjected to a step of concentration. The concentration is preferably achieved by subjecting the aroma condensate or the desorbed aroma to distillation, pervaporation, reverse osmosis or adsorption-desorption, cryoconcentration, freeze drying, and/or staged/partial condensation. It is particularly preferred to subject the aroma condensate or the desorbed aroma to a step of distillation in order to concentrate it.

Recovered aroma condensate, desorbed aroma, or further concentrated aroma condensate or desorbed aroma is preferably added back to tea products to enhance their aroma. Add-back may be by spraying the aroma onto a leaf tea product, instant tea product or a ready to drink product. A drying step may be required for leaf tea and instant tea to bring the moisture content down to stabilize the final product subsequent to aroma add-back. The add-back of aroma condensate can be carried out by using equipment such as a fluid bed dryer, a tray dryer, a vacuum dryer or a freeze dryer for leaf tea and a spray dryer, a thin film dryer or a freeze dryer for instant tea.

### EXAMPLES

The present invention will be further described with reference to the following examples.

### Example 1

The starting material used was leaf obtained from a South Indian plantation. The leaf was macerated by passing it through a CTC machine four times consecutively to obtain dhool. The dhool was allowed to ferment at about 25 °C for 60 minutes. Then the fermented dhool was then mechanically compressed in a pneumatic dewatering system at a pressure of 588.4 kPa to express juice. The pressure was applied, held for 2 minutes and released. This was repeated till the juice stopped coming out. The juice and the residual squeezed dhool were collected.

The residual squeezed dhool was allowed to continue to ferment for another 15 minutes and then dried under vacuum (24 kPa absolute pressure) in a rotary vacuum drier whilst being heated to reduce the moisture content from 75 % to 60% (wet basis). The exhaust gas from the rotary vacuum drier was subjected to condensation in order to recover the aroma. The moisture was monitored by the amount of condensate collected. Finally, the partially dried squeezed residual dhool was dried further in a fluidised bed drier at an inlet air temperature of 120°C till the moisture content was reduced to less than 5 % (wet weight basis) to obtain black leaf tea.

### Example 2

The process of Example 2 was identical to that of Example 1 in all respects except that the mechanical compression step for expressing the juice was omitted. The fermented dhool was initially dried in a rotary vacuum drier, as in Example 1.

### Example 3

The process of Example 3 was identical to that of Example 1 in all respects except that the step of partial drying in the rotary vacuum dryer was omitted. The fermented dhool was directly dried in the fluidised bed drier to obtain the black leaf tea. In this Example the GC analysis was done only for the black leaf tea.

### Example 4

The process of Example 4 was identical to that of Example 1 in all respects except that the mechanical squeezing step and the step of initial drying in the rotary vacuum drier were both omitted.

The processes for the Examples are tabulated below:

**Table 1: Examples 1-4**

| Example | Expression of Juice by squeezing | Aroma Capture during initial Drying |
|---|---|---|
| 1 | Yes | Yes |
| 2 | No | Yes |
| 3 | Yes | No |
| 4 | No | No |

Head Space Gas Chromatography (HSGC) analysis was carried out on the aroma condensates and the black leaf tea for the following compounds: hexanal, 1-pentene-3-ol, t-2hexenal, cis-3-hexen-1-ol, linalool and, methyl salicylate. For analysis of the condensate, 3 mL of the condensate collected during vacuum drying was used. For analysis of the black leaf tea, 3 mL of deionised water (25 °C) was added to 0.5 g of the black leaf tea, and the aroma contents in the headspace were analysed. The parameters of the HSGC analysis are given below:
GC Conditions

| | |
|---|---|
| Column type: | CPwax52CB (WHICH COMPANY) |
| Injector port temperature: | 230 °C |
| Detector port temperature: | 250 °C |
| Split ratio: | 1:10 |
| Helium pressure: | 93.76 kPa |
| Oven temperature ramp: | |
| Initial: | 35 °C, Hold for 120 s |
| Final: | 230 °C, Ramp 10 °C |
| Detector: | Flame lonisation Detector (FID) at 220 °C |

Head Space Conditions

| | |
|---|---|
| Oven temperature: | 75 °C |
| Needle temperature: | 100 °C |
| Transfer temperature: | 110 °C |
| GC cycle time: | 33 min |
| Thermo stating time: | 30 min |
| Pressurisation time: | 3 min |
| Injection time: | 0.3 min |
| Withdrawal time: | 0.5 min |
| Vial venting: | ON |

The concentration of the aqueous condensate (milligrams of total organic carbon per litre of condensate) was measured by a Total Organic Carbon Analyser (Shimadzu Model 5000A), with three injections and a sparge time of 2 minutes. The furnace temperature was 680°C and the dehumidifier temperature was 1.43°C.

Two different sets of experiments were done (Trial 1 and Trial 2) using two different leaf starting materials. The results of the analysis of the aroma concentrates are shown in Table 2.

**Table 2: Analysis of aroma condensate**

| | Amount (mg per kg dry weight of dhool) | | | |
|---|---|---|---|---|
| Compound | Trial 1 | | Trial 2 | |
| | Example 1 | Example 2 | Example 1 | Example 2 |
| hexanal | 0.98 | 0.00 | 11.62 | 0.96 |
| 1-pentene-3-ol | 6.33 | 5.71 | 11.17 | 8.71 |
| t-2hexenal | 18.60 | 14.46 | 40.46 | 20.42 |
| cis-3-hexen-1-ol | 58.02 | 47.20 | 38.57 | 23.60 |
| linalool | 11.35 | 7.61 | 16.86 | 11.82 |
| methyl salicylate | 8.77 | 3.31 | 10.68 | 7.17 |
| Aroma concentration (mg TOC per L condensate) | not measured | not measured | 192.1 | 103.1 |

The aroma content in the condensate obtained from the residual squeezed dhool (Example 1) was found to be more than that obtained from the dhool that was not squeezed (Example 2) for Trial 2 (it was not measured for Trial 1). Furthermore, each aroma compound was present in a higher amount in the condensate obtained from the residual squeezed dhool (Example 1) than that from the dhool that was not squeezed (Example 2) for both Trial 1 and Trial 2.

**Table 3: Analysis of black tea product**

| Compound | Amount (mg per kg dry weight of black leaf tea product) | | | |
|---|---|---|---|---|
| | Example 1 | Example 2 | Example 3 | Example 4 |
| hexanal | 2.01 | 0.28 | 1.47 | 0.83 |
| 1-pentene-3-ol | 2.64 | 1.77 | 3.97 | 3.04 |
| t-2hexenal | 6.82 | 3.5 | 12.9 | 8.74 |
| cis-3-hexen-1-ol | 1.47 | 0.73 | 4.27 | 2.41 |
| linalool | 0.33 | 0.18 | 1.15 | 0.78 |
| methyl salicylate | 0.18 | 0.09 | 0.39 | 0.28 |

The amount of specific aroma compounds in the made tea from the residual squeezed dhool (Examples 1 and 3) was found to be higher than in the made tea from the unsqueezed dhool (Examples 2 and 4, respectively).

## Claims

1. A process comprising the steps of:
a) expressing juice from fresh tea leaves thereby to produce leaf residue and tea juice,
b) subjecting the leaf residue to drying in a dryer to obtain dried leaf residue and a dryer exhaust gas stream, and;
c) recovering aroma from the dryer exhaust gas stream.

2. A process according to claim 1 wherein the dryer of the step (b) is a vacuum dryer.

3. A process according to claim 1 or claim 2 wherein the moisture content in the dried leaf residue at the end of the step (b) is less than 65% by weight.

4. A process according to any one of the preceding claims wherein the fresh tea leaves are fermented before expressing the juice.

5. A process according to any one of the preceding claims wherein said fresh tea leaves are macerated before expressing juice.

6. A process according to any one of the preceding claims wherein the dried leaf residue is further dried after step (b) to a moisture content of less than 10% by weight to obtain a leaf tea product.

7. A process according to claim 6 wherein the leaf tea product is black tea.

8. A process according to any one of the preceding claims wherein the amount of expressed juice is from 50 mL to 800 mL per kg of fresh tea leaves.

## Patentansprüche

1. Verfahren,
das die folgenden Schritte aufweist:
a) Auspressen von Saft aus frischen Teeblättern, wodurch ein Blattrückstand und Teesaft erzeugt wird;
b) Unterziehen des Blattrückstands dem Trocknen in einem Trockner, um getrockneten Blattrückstand und einen Abgasstrom des Trockners zu erhalten; und
c) Gewinnen von Aromen aus dem Abgasstrom des Trockners.

2. Verfahren nach Anspruch 1,
wobei der Trockner vom Schritt b) ein Vakuumtrockner ist.

3. Verfahren nach Anspruch 1 oder 2,
wobei der Feuchtigkeitsgehalt des getrockneten Blattrückstands am Ende des Schrittes b) weniger als 65 Gew.-% beträgt.

4. Verfahren nach einem der vorstehenden Ansprüche,
wobei die frischen Teeblätter vor dem Auspressen des Saftes fermentiert werden.

5. Verfahren nach einem der vorstehenden Ansprüche,
wobei die frischen Teeblätter vor dem Auspressen des Saftes mazeriert werden.

6. Verfahren nach einem der vorstehenden Ansprüche,
wobei der getrocknete Blattrückstand nach dem Schritt b) bis zu einem Feuchtigkeitsgehalt von weniger als 10 Gew.-% weiter getrocknet wird, um ein Blattteeprodukt zu erhalten.

7. Verfahren nach Anspruch 6,
wobei das Blattteeprodukt Schwarzer Tee ist.

8. Verfahren nach einem der vorstehenden Ansprüche,
wobei die Menge des ausgepressten Saftes 50 bis 800 ml pro kg frischer Teeblätter beträgt.

## Revendications

1. Procédé comprenant les étapes consistant :
a) à exprimer du jus de feuilles de thé fraîches pour produire par-là un résidu de feuilles et du jus de thé,
b) à soumettre le résidu de feuilles à un séchage dans un dispositif de séchage pour obtenir un résidu de feuilles séché et un courant de gaz d'échappement de dispositif de séchage, et ;
c) à récupérer un arôme à partir du courant de gaz d'échappement de dispositif de séchage.

2. Procédé selon la revendication 1, dans lequel le dispositif de séchage de l'étape (b) est un dispositif de séchage sous vide.

3. Procédé selon la revendication 1 ou la revendication 2, dans lequel la teneur en humidité dans le résidu de feuilles séché à la fin de l'étape (b) est inférieure à 65 % en poids.

4. Procédé selon l'une quelconque des revendications précédentes, dans lequel les feuilles de thé fraîches sont fermentées avant d'exprimer le jus.

5. Procédé selon l'une quelconque des revendications précédentes, dans lequel lesdites feuilles de thé fraîches sont macérées dans d'exprimer du jus.

6. Procédé selon l'une quelconque des revendications précédentes, dans lequel le résidu de feuilles séché est de plus séché après l'étape (b) jusqu'à une teneur en humidité inférieure à 10 % en poids pour obtenir un produit de thé en feuilles.

7. Procédé selon la revendication 6, dans lequel le produit de thé en feuilles est du thé noir.

8. Procédé selon l'une quelconque des revendications précédentes, dans lequel la quantité de jus exprimé est de 50 ml à 800 ml par kg de feuilles de thé fraîches.
